(19) Europäisches Patentamt

European Patent Office

Office européen des brevets

(11) Veröffentlichungsnummer: **0 326 945**
**A2**

(12) **EUROPÄISCHE PATENTANMELDUNG**

(21) Anmeldenummer: 89101351.8

(22) Anmeldetag: 26.01.89

(51) Int. Cl.⁴: **G01N 21/89**

(30) Priorität: 03.02.88 DE 3803181

(43) Veröffentlichungstag der Anmeldung:
09.08.89 Patentblatt 89/32

(84) Benannte Vertragsstaaten:
CH DE FR GB LI

(71) Anmelder: **Erwin Sick GmbH Optik-Elektronik**
**Sebastian-Kneipp-Strasse 1**
**D-7808 Waldkirch(DE)**

(72) Erfinder: **Baller, Wilfried**
**Adlerstrasse 3**
**D-8011 Grasbrunn(DE)**
Erfinder: **Hoffmann, Paul**
**Kraelerstrasse 3**
**D-8000 München 70(DE)**
Erfinder: **Der weitere Erfinder hat auf seine**
**Nennung verzichtet**

(74) Vertreter: **Dipl.-Phys.Dr. Manitz Dipl.-Ing.,**
**Dipl.-Wirtsch. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**D-8000 München 22(DE)**

(54) Optische Oberflächeninspektionsvorrichtung.

(57) Eine optische Oberflächeninspektionsvorrichtung weist eine Lichtquelle (24), ein Spiegelrad (16) und einen das von einer Oberfläche (18) reflektierte Licht empfangenden Fotoempfänger (17) auf. In den Sende- und/oder Empfangsstrahlengang (12, 13) ist ein sich optisch nur über eine Teilstrecke (19) des Abtastbereiches (11) erstreckendes, den Polarisationszustand des auftreffenden Lichtes veränderndes Plättchen (14) einbringbar. Die mit der Lichtablenkvorrichtung (16) synchronisierte Auswerteelektronik (15) unterscheidet das elektrische Empfangssignal am Fotoempfänger (17) wahrend der Phasen, wo das Licht durch das Plättchen (14) hindurchgeht, und der Phasen, wo das Licht nicht durch das Plättchen (14) hindurchgeht.

Fig. 1

Die Erfindung betrifft eine optische Oberflächeninspektionsvorrichtung mit einer Lichtquelle, insbesondere einem Laser, einer Lichtablenkvorrichtung, insbesondere einem Spiegelrad, welches auf der Oberfläche einen diese entlang eines linearen Abtastbereiches periodisch abtastenden Lichtfleck erzeugt, und mit einer einen Fotoempfänger und eine Auswerteelektronik aufweisenden Lichtempfangsvorrichtung, welche von der Oberfläche reflektiertes oder durch sie hindurch gegangenes Licht empfängt und ein entsprechendes elektrisches Signal abgibt, wobei das auf die Oberfläche auftreffende Licht polarisiert ist und die Lichtempfangsvorrichtung einen das polarisierte Licht sperrenden Analysator umfaßt.

Bei einer bekannten Oberflächen-Fehlerüberwachungsvorrichtung dieser Art (DE-OS 33 14 620) ist es bereits bekannt geworden, mit polarisiertem Licht zu arbeiten, so daß bei ungestörter Oberfläche der Fotoempfänger der Lichtempfangsvorrichtung kein Licht enthält und ein entsprechendes Dunkelsignal abgibt. Um den im allgemeinen als Fotoempfänger verwendeten Multiplier auf die richtige Empfindlichkeit einzuregeln, war es bisher erforderlich, eine monatliche individuelle Überprüfung von Hand vorzunehmen, in dem eine Oberfläche, z. B. die Oberfläche einer CD-Platte mit Referenzfehlern in den Strahlengang eingebracht und dann mittels eines Oszilloskops untersucht wurde. Abgesehen davon, daß die Handregelung Fehleinstellungsmöglichkeiten beinhaltet, sind die großen Zeitabstände zwischen den einzelnen Justiervorgängen problematisch. Dies kann insbesondere im Zusammenhang mit modernen Multiplier-Röhren zu Schwierigkeiten führen, welche wesentlich steilere Verstärkungskennlinien besitzen und bei denen mit sehr großen Driftraten zu rechnen ist.

Ein weiteres Problem besteht darin, daß bei den zu inspizierenden Oberflächen gelegentlich Bereiche vorkommen, wo durch Fehler hervorgerufene Oberflächenkontraste festgestellt werden sollen, was im polarisiertem Licht zwischen gekreuzten Polarisatoren nicht möglich ist.

Die Aufgabe der Erfindung besteht somit darin, eine optische Oberflächeninspektionsvorrichtung zu schaffen, welche laufend automatisch die Gewinnung eines optische Referenzsignales ermöglicht und auch die Erfassung von Kontrastfehlern in vorbestimmten Bereichen der inspizierten Oberfläche gestattet.

Zur Lösung dieser Aufgabe sind die Merkmale des kennzeichnenden Teils des Patentanspruches 1 vorgesehen.

Der Erfindungsgedanke ist also darin zu sehen, daß gezielt an einer vorbestimmten Stelle des Abtastbereiches, jedoch nur entlang eines Bruchteiles desselben ein eine Aufhellung am Fotoempfänger bewirkendes Plättchen angeordnet wird, wodurch das beim Überstreichen des Plättchens durch den Abtastlichtstrahl gewonnene elektrische Signal entweder zur Multiplier-Regelung oder auch zur Analysierung von Kontrastfehlern herangezogen werden kann.

Die Plättchen können nach den Ansprüchen 2 oder 3 ausgebildet sein.

Bei der Ausführungsform nach Anspruch 4 kann das Plättchen zu gewünschten Zeiten, beispielsweise periodisch in den Strahlengang eingebracht werden, wobei aufgrund der Synchronisierung mit der Auswerteelektronik in diesen Zeiten jeweils ein Testsignal gewonnen werden kann, das den einwandfreien Zustand der Vorrichtung signalisiert.

Bevorzugt ist die Ausführungsform nach Anspruch 5, weil hier bei jeder Abtastung ein Referenzsignal zur Steuerung des Multipliers gewonnen wird.

Aufgrund der Ausführungsform nach Anspruch 6 kann entlang eines vorbestimmten Bruchteils des Abtastbereiches eine Inspektion auf Kontrastfehler vorgenommen werden. Gegebenenfalls könnten auch mehrere Plättchen entlang des Abtastbereiches in geeigneten Abständen vorgesehen werden, um überall dort, wo Kontrastfehler auftreten können, eine Aufhellung am Fotoempfänger durchzuführen.

Das Plättchen ist bevorzugt nach Anspruch 7 ausgebildet.

Die Erfindung wird besonders bevorzugt bei der Fehlerinspektion von CD-Platten angewendet, wobei die Merkmale der Ansprüche 8 bis 10 mit Vorteil verwendet werden.

Die Erfindung wird im folgenden beispielsweise anhand der Zeichnung beschrieben; in dieser zeigt:

Figur 1 eine erste Ausführungsform einer erfindungsgemäßen optischen Oberflächeninspektionsvorrichtung,

Figur 2 einen vergrößerten Ausschnitt von Figur 1 im Bereich des Plättchen 14,

Figur 3 eine Ansicht analog Figur 1 einer weiteren Ausführungsform,

Figur 4 eine perspektivische Ansicht einer CD-Platte mit in dessen Nähe angeordnetem Plättchen 14 und

Figur 5 vier Fehlerdiagramme, wie sie von der Auswerteelektronik 15 nach den Figuren 1 und 3 auf einem angeschlossenen Oszilloskop 23 wiedergegeben werden, wenn die CD-Platte 22 nach Figur 4 abgetastet wird, wobei die Diagramme die Amplitude am Ausgang des Fotoempfängers 17 in Abhängigkeit vom Radius r der CD-Platte 22 nach Fig. 4 zeigen.

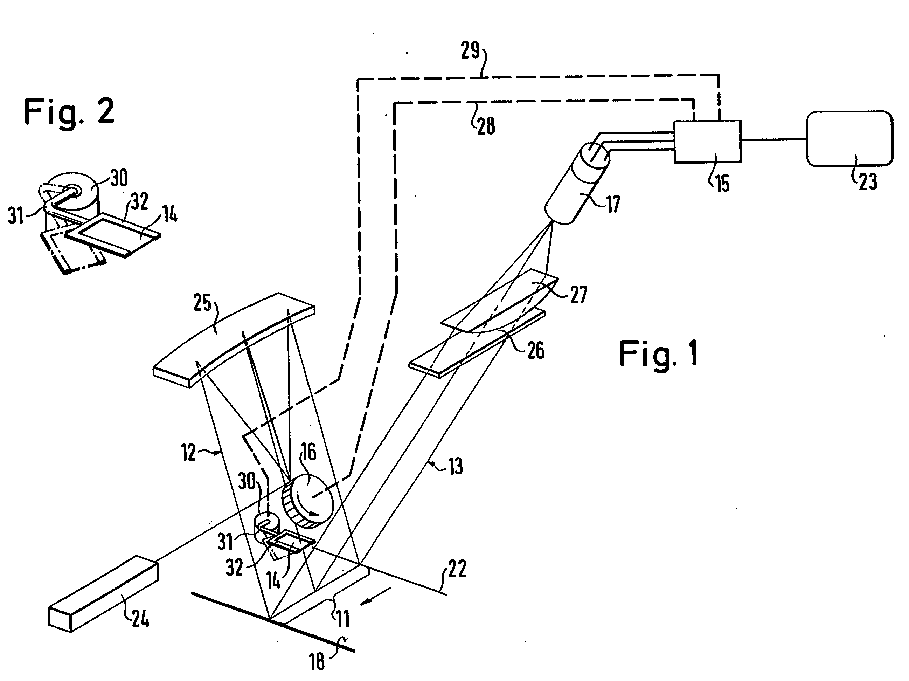

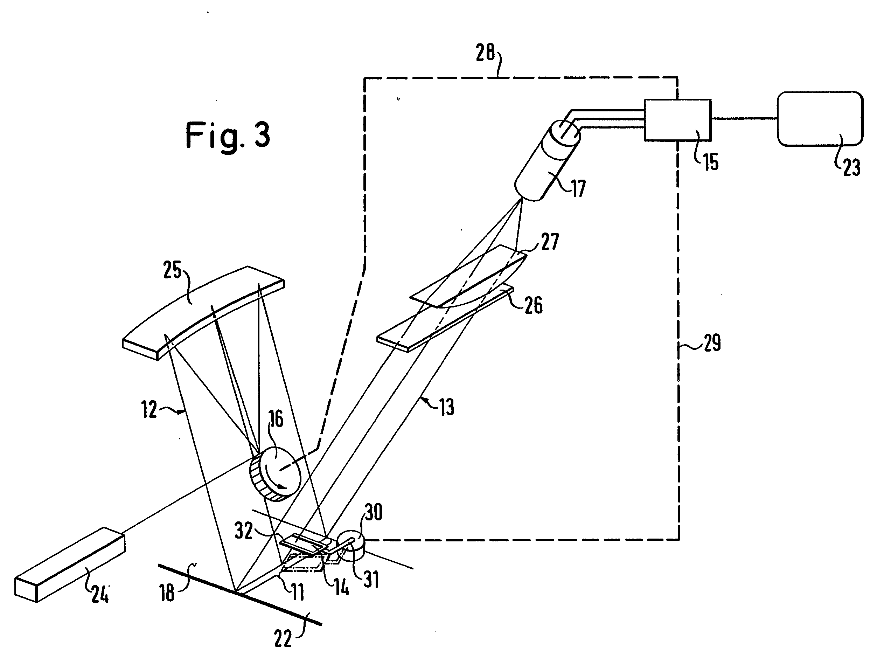

Nach Figur 1 beaufschlagt ein polarisierter Laser 24, der linear polarisiertes Laserlicht aussendet, ein Spiegelrad 16, welches im Brennpunkt eines streifenförmigen Hohlspiegels 25 angeordnet ist. Das vom Spiegelrad 16 reflektierte Licht trifft etwas schräg auf den Hohlspiegel 25 auf, so daß das von diesem reflektierte Licht am Spiegelrad 16 vorbei zu der Oberfläche eines Testobjekts, z. B. einer CD-Platte 22 gelangen kann, welche in Figur 1 und 3 nur schematisch angedeutet ist. Das Spiegelrad 16 lenkt das vom Laser 24 kommende Licht zum Hohlspiegel 25 um, so daß dieser von einem ihn fächerartig überstreichenden Lichtstrahl beaufschlagt wird. Reflektiert wird vom Hohlspiegel 25 ein Fahrstrahl, der zur Oberfläche 18 gerichtet ist und beim Drehen des Spiegelrades 16 in Pfeilrichtung parallel zu sich selbst verschoben wird, so daß ein Lichtfleck die Oberfläche 18 entlang eines linearen Abtastbereiches 11 periodisch vom rechten zum linken Ende überstreicht.

Der Sendestrahlengang 12 ist in der aus Figur 1 ersichtlichen Weise schräg auf die Oberfläche 18 gerichtet, so daß unter dem Reflektionswinkel ein Empfangsstrahlengang 13 von der im wesentlichen spiegelnd reflektierenden Oberfläche 18 ausgeht, der durch einen streifenförmigen Analysator 26 und eine streifenförmige Sammellinse 27 auf einem Fotomultiplier 17 konzentriert wird, der an eine Auswerteelektronik 15 angeschlossen ist. Der Analysator 26 ist relativ zu dem eintretenden polarisiertem Licht gekreuzt, so daß im Normalfall, wenn an der Oberfläche 18 keine Veränderung des Polarisationszustandes auftritt, kein oder nur sehr wenig Licht zum Fotomultiplier 17 gelangt.

Nach Figur 1 und 2 ist nahe dem Sendestrahlengang 12 ein Stellmotor 30 angeordnet, der über ein Gestänge 31 mit einer Halterung 32 für ein den Polarisationszustand änderndes Plättchen 14, insbesondere ein $\lambda/4$-Filter verbunden ist. Der Stellmotor 30 ist über eine Steuerleitung 29 mit der Auswerteelektronik 15 verbunden, so daß von dort aus ein Schwenksignal auf den Stellmotor 30 in der Weise gegeben werden kann, daß das Plättchen 14 aus der neben dem Sendestrahlengang 12 befindlichen und strichpunktiert dargestellten Position in den Sendestrahlengang 12 eingeschwenkt wird, was in den Figuren 1 und 2 in ausgezogenen Linien wiedergegeben ist.

Die Auswerteelektronik 15 ist auch über eine Steuerleitung 28 mit dem Spiegelrad 16 verbunden, so daß der Auswerteelektronik 15 in jedem Augenblick gemeldet wird, an welcher Stelle des Abtastbereiches 11 sich der Fahrstrahl bzw. Lichtfleck gerade befindet.

Mit der Auswerteelektronik 15 ist ein Oszilloskop 23 verbunden, welches der Fehlerdarstellung dient.

Bei dem Ausführungsbeispiel nach Figur 3, in dem gleiche Bezugszahlen entsprechende Teile wie in den Figuren 1 und 2 bezeichnen, ist der Stellmotor 30 nahe dem Empfangsstrahlengang 13 angeordnet, und das Plättchen 14 wird aus der wieder strichpunktiert dargestellten unwirksamen Lage beim Betätigen des Stellmotors 30 in den Empfangsstrahlengang 13 eingeschwenkt. Im übrigen ist die Ausbildung genauso wie in den Figuren 1 und 2.

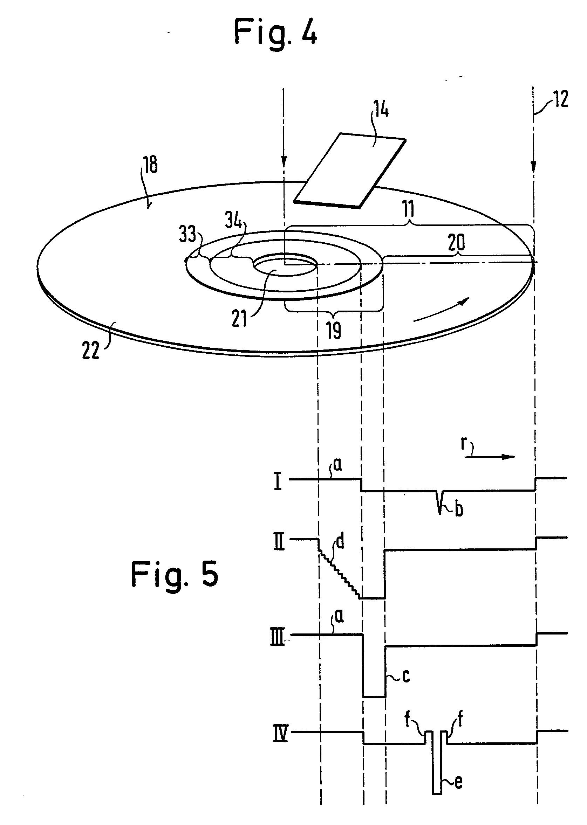

Figur 4 zeigt in perspektivischer Darstellung eine CD-Platte, die mit einer Oberflächeninspektionsvorrichtung gemäß den Figuren 1, 2 oder gemäß Figur 3 auf Fehler überwacht werden soll.

Die CD-Platte 22 weist eine oberflächenstrukturierte radial äußere Zone 20 auf, in welcher sich zum Beispiel eine Musikwiedergabe bewirkenden Rillen befinden. Radial nach innen schließt eine metallisierte Zone 33 ohne Struktur an, während noch weiter innen eine ebenfalls konzentrische Zone 34 ohne Metallisierung folgt.

In der Mitte befindet sich die Zentrierbohrung 21.

Eine optische Oberflächeninspektionsvorrichtung nach den Figuren 1 oder 3 tastet die Oberfläche 18 der CD-Platte 22 entlang des radial verlaufenden Abtastbereiches 11 ab, welcher vom Rand bis zur Mitte der Platte 22 reicht, welche sich dabei in Richtung des Pfeiles um ihr Zentrum dreht.

Wird die CD-Platte 22 gemäß Figur 4 von einer Inspektionsvorrichtung nach den Figuren 1 und 3 radial abgetastet, ohne daß ein Plättchen 14 im Strahlengang angeordnet ist, so ergibt sich auf dem Oszilloskop 23 eine Darstellung gemäß dem Diagramm I in Figur 5. Verläuft der Abtastlichtstrahl in der nichtmetallisierten Zone 34, so erscheint am Fotomultiplier 17 kein Signal. Dieser Bereich ist im Diagramm I mit a bezeichnet. Erst wenn die metallisierten Zonen 33, 20 erreicht werden, erscheint aufgrund einer nicht ganz exakten Sperrung durch den gekreuzten Analysator 26 ein schwaches Signal auf dem Oszilloskop 23. Etwaige depolarisierende Fehler machen sich beispielsweise als eine Spitze b in diesem Signal bemerkbar.

Die Diagramme II und III zeigen den Abtastvorgang, wenn radial innerhalb von der oberflächenstrukturierten Zone 20 nach Figur 4 ein den Polarisationszustand änderndes Plättchen 14 angeordnet wird, welches in Figur 4 schematisch angedeutet ist.

Das Diagramm III zeigt dabei die Darstellung auf dem Oszilloskop 23 beim Vorliegen einer einwandfreien Platte. Im Bereich a, der der nichtmetallisierten Zone 34 entspricht, entsteht kein Signal, während beim Auftreffen des Lichtes auf die metallisierte, jedoch nicht strukturierte Zone 33 ein starkes Rechtecksignal c auftritt. In diesem Bereich ist das Sende- oder Empfangslicht durch das Plättchen 14 hindurchgegangen.

Anschließend nimmt das Signal wieder den niedrigeren Wert in der oberflächenstrukturierten Zone 20 an, über den sich das Plättchen 14 nicht erstreckt.

Bei der CD-Plattenherstellung kann es nun vorkommen, daß die nichtmetallisierte Zone 34 durch Metalldampf verunreinigt wird, was sich durch eine erhöhte Reflexion von Licht in diesem Bereich bemerkbar macht. Das Diagramm II in Figur 5 zeigt ein Signal auf dem Oszilloskop 23 in einem derartigen Fall. Die Flanke d des Oszilloskopsignales ist auf ein unerwünschtes Übergreifen der Metallisierung der Zone 33 in die Zone 34 zurückzuführen. Beim Erscheinen eines derartigen Signales wird der Fehler der Bedienungsperson signalisiert und die betreffende CD-Platte kann ausgesondert werden. Außerdem kann der Fehler für die Störung nunmehr gesucht und behoben werden.

Während die Diagramme II und III in Figur 5 den Fall eines stationär angeordneten Plättchens 14 wiedergeben, zeigt das Diagramm IV den Fall, daß gemäß den Figuren 1 bis 3 ein Plättchen 14 nur kurzzeitig zur Kontrolle in den Strahlengang eingeschwenkt wird, was auch innerhalb der Zone 20 geschehen kann. Von besonderer Bedeutung ist, daß der Rahmen 32, in den das Plättchen 14 nach den Figuren 1 bis 3 eingesetzt ist, lichtundurchlässig ist. Auf diese Weise werden beim Überfahren des Lichtfleckes über das Plättchen 14 gemäß dem Diagramm IV in Figur 5 neben dem Lichtimpuls e schmale Dunkelimpulse f erzeugt, welche zur Identifizierung des Bereiches herangezogen werden können, in dem sich das Plättchen 14 befindet. In diesem Fall wird beispielsweise das normale schwache Signal im Bereich der oberflächenstrukturierten Zone 20 durch einen kurzzeitigen starken Rechteckimpulses überlagert. Dieses Signal kann zur Überprüfung der Funktionsfähigkeit der Vorrichtung oder auch zur Regelung des Fotomultipliers 17 ausgenützt werden.

Ebenso kann das bei jeder Abtastung auftretende Rechtecksignal c nach dem Diagramm III in Figur 5 für die Multiplierregelung genutzt werden.

Die Erfindung ermöglicht es somit, eine automatische Multiplierregelung durchzuführen, das System durch einen Hellfeld-Impuls nach Wunsch laufend automatisch zu überprüfen und/oder an einem bestimmten Inspektionsbereich ein Hellfeld zur Auswertung von Kontrastfehlern vorzusehen.

Grundsätzlich könnte auch im Bereich 19 der CD-Platte 22 nach Figur 4 nahe der Oberfläche 18 und parallel zu ihr eine Blende angeordnet werden, auf der ein reflektierendes den Polarisationszustand änderndes Plättchen 14 fest angeordnet wird. In diesem Fall würde zwar der radial innerhalb der oberflächenstrukturierten Zone 20 befindliche Bereich 19 der CD-Platte 22 nicht überwacht, doch würde ein derartiger fest angeordneter Reflektor bei jeder Abtastung ein Rechteckbasis-Signal analog c im Diagramm III für die Multiplierregelung zur Verfügung stellen.

## Ansprüche

1. Optische Oberflächeninspektionsvorrichtung mit einer Lichtquelle, insbesondere einem Laser, einer Lichtablenkvorrichtung, insbesondere einem Spiegelrad, welches auf der Oberfläche einen diese entlang eines linearen Abtastbereiches periodisch abtastenden Lichtfleck erzeugt, und mit einer einen Fotoempfänger und eine Auswerteelektronik aufweisenden Lichtempfangsvorrichtung, welche von der Oberfläche reflektiertes oder durch sie hindurch gegangenes Licht empfängt und ein entsprechendes elektrisches Signal abgibt, wobei das auf die Oberfläche auftreffende Licht polarisiert ist und die Lichtempfangsvorrichtung einen das polarisierte Licht sperrenden Analysator umfaßt, dadurch **gekennzeichnet,** daß in den Sende- und/oder Empfangsstrahleneingang (12, 13) an einer vorbestimmten Stelle ein sich optisch nur über eine Teilstrecke (19) des Abtastbereiches (11) erstreckendes, den Polarisationszustand des auftreffenden Lichtes veränderndes Plättchen (14) einbringbar ist, und daß die mit der Lichtablenkvorrichtung (16) synchronisierte Auswerteelektronik (15) das elektrische Empfangssignal am Fotoempfänger (17) während der Phasen, wo das Licht durch das Plättchen (14) hindurchgeht bzw. von ihm reflektiert wird, und der Phasen, wo das Licht nicht durch das Plättchen (14) hindurchgeht bzw. von ihm reflektiert wird, unterscheidet.

2. Vorrichtung nach Anspruch 1, dadurch **gekennzeichnet,** daß das Plättchen (14) transparent und vom Sende- oder Empfangslicht durchlaufen ist.

3. Vorrichtung nach Anspruch 1, dadurch **gekennzeichnet,** daß das Plättchen (14) ein den Polarisationszustand ändernder Reflektor ist, der nahe der zu inspizierenden Oberfläche (18) angeordnet ist.

4. Vorrichtung nach einem der vorhergehenden Ansprüche, dadurch **gekennzeichnet,** daß das Plättchen (14) als schmaler Testfinger kurzzeitig in den Strahlengang (12, 13) einbringbar ist, um die Funktionsfähigkeit zu testen.

5. Vorrichtung nach einem der vorhergehenden Ansprüche, dadurch **gekennzeichnet,** daß durch das in den Strahlengang (12, 13) eingebrachte Plättchen (14) in der Auswerteelektronik (15) ein Basissignal für die Regelung des vorzugsweise durch ein Photomultiplier gebildeten Fo toempfängers (17) gewonnen wird.

6. Vorrichtung nach einem der vorhergehenden Ansprüche, dadurch **gekennzeichnet,** daß durch das in den Strahlengang (12, 13) eingebrachte Plättchen (14) ein auf Kontrastfehler zu untersuchender Teil der Oberfläche (18) abgegrenzt wird, und daß die elektrischen Empfangssignale in der Auswerteelektronik (15) während der Zeit, wo das Licht durch das Plättchen (14) hindurchgeht, auf Helligkeitsschwankungen des Empfangslichtes analysiert werden.

7. Vorrichtung nach einem der vorhergehenden Ansprüche, dadurch **gekennzeichnet,** daß linear polarisiertes Licht verwendet wird und das Plättchen ein $\lambda/2$-, bevorzugt ein $\lambda/4$-Plättchen (14) ist.

8. Vorrichtung nach einem der vorhergehenden Ansprüche zur Inspektion der Oberfläche von CD-Platten, bei der das Abtastsendelicht an der Oberfläche der CD-Platte reflektiert und zur Lichtempfangsvorrichtung gelenkt wird, dadurch **gekennzeichnet,** daß die Teilstrecke (19) des Abtastbereiches (11), wo das Plättchen (14) angeordnet ist, sich radial innerhalb des oberflächenstrukturierten Teiles (20) der CD-Platte (22) erstreckt und zumindest bis zum Mittelloch (21) der CD-Platte (22) reicht, wobei von der Auswerteelektronik (15) etwaige Verunreinigungen der nichtmetallisierten Zone mit Metalldampf festgestellt werden.

9. Vorrichtung nach Anspruch 8, dadurch **gekennzeichnet,** daß die Teilstrecke (19) sich auch noch über die nicht-oberflächenstrukturierte metallisierte Zone (21) radial innerhalb des oberflächenstrukturierten Teiles (20) erstreckt und die Auswerteelektronik (15) die Qualität der betreffenden Metallisierung prüft und/oder das dort gebildete elektrische Signal als Basissignal verwendet.

10. Vorrichtung nach einem der Ansprüche 1 bis 7 zur Inspektion der Oberfläche von CD-Platten, bei der das Abtastsendelicht an der Oberfläche der CD-Platte reflektiert und zur Lichtempfangsvorrichtung gelenkt wird, dadurch **gekennzeichnet,** daß die Teilstrecke (19) des Abtastbereiches (11) sich radial innerhalb des oberflächenstrukturierten Teiles (20) erstreckt und zumindest bis zum Mittelloch (21) der CD-Platte (22) reicht, wobei entlang der Teilstrecke (19) nahe der CD-Platte (22) parallel zu dieser ein reflektierendes Plättchen (14) angeordnet ist, aufgrund dessen die Auswerteelektronik (15) bei jeder Abtastperiode einmal ein Basissignal für die Fehlerinspektion bzw. die Regelung des Fotoempfängers (17) bilden kann.

Fig. 1

Fig. 2

Fig. 3

EP 0 326 945 A2

# Fig. 4

# Fig. 5